# EUROPEAN PATENT SPECIFICATION

(11) **EP 3 861 860 B1**
(45) Date of publication and mention of the grant of the patent: **13.12.2023**
(21) Application number: 21154515.7
(22) Date of filing: 01.02.2021
(51) Int. Cl.: A21D 8/06, A21D 13/40, A21D 13/80, A21C 15/00, A47J 37/08, A21D 15/04

(54) **PROCESS FOR THE PRODUCTION OF RUSK SLICES**
VERFAHREN ZUR HERSTELLUNG VON ZWIEBACK SCHEIBEN
PROCEDE DE PRODUCTION DE TRANCHES DE BISCOTTES

(30) Priority: 04.02.2020 IT 202000002122
(43) Date of publication of application: 11.08.2021
(73) Proprietor: BARILLA G. e R. Fratelli S.p.A., 43100 Parma (IT)
(72) Inventor: MASOTTI, Valentina, 43123 Parma (IT); CELLI, Silvia, 43022 Montechiarugolo (PR) (IT); GIOVANETTI, Marco, 43122 Parma (IT); MEZZADRI, Paolo, deceased (IT)
(74) Representative: Botti & Ferrari S.p.A.

(56) References cited:
- WO-A1-2009/021310
- DD-A1- 237 607
- GB-A- 900 292
- US-A1- 2013 295 234
- DATABASE GNPD [Online] MINTEL; 29 September 2006 (2006-09-29), anonymous: "Brunch Rusks", XP055740610, retrieved from www.gnpd.com Database accession no. 592989
- DATABASE GNPD [Online] MINTEL; 14 June 2005 (2005-06-14), anonymous: "Swedish Bread Rusks", XP055740614, retrieved from www.gnpd.com Database accession no. 368225
- LAZARIDOU ATHINA ET AL: "Impact of flour particle size and hydrothermal treatment on dough rheology and quality of barley rusks", FOOD HYDROCOLLOIDS, ELSEVIER BV, NL, vol. 87, 27 August 2018 (2018-08-27), pages 561-569, XP085506955, ISSN: 0268-005X, DOI: 10.1016/J.FOODHYD.2018.08.045

## Description

### Field of application

The present invention relates to a process for the preparation of rusk slices. More specifically, such a process involves the preparation of rusk slices which have a large surface area available for the application of a topping or spreadable product.

The aforementioned product may be stored at room temperature for a medium-to-long time period.

### Prior art

The production of food products such as rusk slices in various sizes and forms, usually with a round or square form or having the typical cross-section of a loaf of bread, is known in the art.

As moreover laid down in Italian Presidential Decree No. 283 dated 23 June 1993 concerning the regulations governing the legal denomination of certain bakery products, rusk slices are bakery products obtained by the baking, division by means of transverse cutting, maturing where necessary, and subsequent toasting of one or more leavened doughs made with one or more cereal meals, including wholemeal flours, together with water and optionally with the addition of salt, sugar, oils and fats, malted products, edible bran, as well as other ingredients, including aromas and additives which are permitted by law.

The regulations also define the moisture content of rusk slices, which must have a maximum value of about 7% by weight of the total weight of the finished product.

Rusk slices have an appearance similar to that of toasted bread and generally have a typically golden colour, two flat sides, and a lateral crust.

Differently from toasted bread, while maintaining a certain friability, depending on the baking and toasting conditions employed in the production process, rusk slices have a distinctly crunchy consistency in terms of taste.

When eaten, rusk slices are commonly used as a base for a spreadable product of various types and of varying composition, such as a cocoa-based cream, on one of the two sides.

Depending on the roughness and the porosity of the surface of the sides of the rusk slice, as well as the consistency of the spreadable product, the consumer removes the desired amount of product from the jar or packaging, generally with the aid of a spoon or a knife, applying it onto one of the two sides of the rusk slice.

Being careful not to break the rusk slice, which has a certain rigidity precisely to prevent this problem from occurring too easily, the consumer terminates the operations for preparation of the rusk slices thus garnished, distributing the spreadable product in a more or less uniform manner depending on personal preference.

However, especially when the spreadable product is particularly fluid, it often happens that the amount of product applied on the surface of the rusk slice is somewhat limited.

In fact, in order to prevent spillages from the edge of the slice and consequent dripping, the consumer must pay particular attention during the application of the spreadable product onto the slice.

GB900292 A discloses rusks or toasts prepared from pre-baked slices of dough by effecting incisions on one or both sides of the slice before toasting. Incisions on the one surface only are preferably about 6/ 10 of the slice thickness but, when both surfaces are cut, the incisions are approximately half this depth. Incisions are provided in at least one surface of the slices by means of sharp cutting elements. Incisions are provided in order to avoid the deformation of the rusks or toasts in the second baking process.

The publications XP055740610 and XP055740614, available on the online database GNPD and having the titles "Brunch Rusks" and "Swedish Bread Rusks", respectively, disclose breakfast bakery products, in particular rusks with one grooved surface. Rusks are made from buns which are halved. Preparation methods are not disclosed.

The international publication WO2009021310 A1 discloses an impression forming method for bread slices. The impression is done by means of plates which may be heated, so as to obtain grooved bread slices. It is disclosed that, in some embodiments, parallel grooves may provide more surface area exposed to a toasting element; however, this document does not disclose a method comprising a final baking or toasting step to obtain a rusk slice.

Basically, the technical problem underlying the present invention is that of providing a rusk slice of the traditional type, as well as a process suitable for the production thereof, namely a rusk slice which is obtained using ingredients and a process which comply with the existing regulations and which has the typical organoleptic characteristics associated with this type of bakery product, which are nowadays popular among consumers, while at the same time being able to overcome the problems described above, namely facilitate the retention of a greater amount of spreadable product.

### Summary of the invention

This technical problem has been solved, according to the invention, by means of a process for the production of rusk slices comprising the following steps:
a) providing a dough comprising at least a cereal meal, water and a leavening agent;
b) oven-baking said dough, thereby obtaining a loaf of bread;
c) cutting crosswise said loaf of bread into individual slices of bread having a preset thickness, a perimetral crust and two flat opposite sides;
d) arranging said slices of bread so that at least one side faces an engraving module which has a heatable embossed surface;
e) bringing the heatable embossed surface of the engraving module into contact with said at least one side of the slices of bread facing the engraving module for a time of between 0.5 and 3 seconds so as to impress on said side a negative engraving having a profile complementing that of said heatable embossed surface of the engraving module, the heatable embossed surface having a temperature of between 190°C and 260°C;
f) toasting said slices of bread thus engraved, thereby obtaining rusk slices having at least one engraved side and having a moisture content of between 2% and 7% by weight of their total weight.

For the purposes of the present invention, the expression "rusk slices" is understood as meaning bakery products obtained by the baking, division by means of transverse cutting, maturing as required, and subsequent toasting of one or more leavened doughs, comprising one or more cereal meals, including wholemeal flours, water, a leavening agent and, optionally, salt, sugar, oils and fats, malt, malted products, edible bran, as well as other ingredients, including aromas and further additives.

In an entirely advantageous manner, as will be seen below with reference to the detailed description, with the process according to the present invention it is possible to obtain a rusk slice with a large available surface area, for example, as will be seen below, a ridged rusk slice.

The available surface area of the rusk slice thus obtained is greater than the available surface area of a rusk slice of the prior art, obtained by means of cutting of a loaf of bread with the same cross-section; therefore a greater amount of spreadable product may, for example, be applied on the rusk slice thus obtained.

More specifically, in particular owing to the aforementioned engraving step e), which is performed with the aid of an engraving module having a specific temperature, it is possible to impress permanently an engraving on at least one of the two sides of the rusk slice.

By means of the subsequent toasting step f) it is also possible to ensure the uniformity of the structural and consistency characteristics of the rusk slice on which said engraving has been previously impressed.

Basically, the end consumer will be provided with a rusk slice which has a greater surface area available for application of a spreadable topping; the rusk slice thus obtained also has rigidity characteristics suitable for being used for the application of a spreadable product, as well as a consistency, in terms of taste, which is typically crunchy and pleasing, as will be seen below in relation to the detailed description.

Preferably, during step a), the leavening agent included in the aforementioned dough is a sourdough yeast, brewer's yeast or any yeast or composition comprising a live yeast.

Preferably, the oven-baking step b) is carried out at a temperature of between 150°C and 240°C, more preferably between 180°C and 230°C.

In an equally preferred manner, the oven-baking step b) is carried out for a time of between 10 minutes and 60 minutes, more preferably between 20 minutes and 30 minutes.

More preferably, the oven-baking step b) is carried out so as to obtain a loaf of bread with a moisture content of between 25% and 34% by weight of its total weight.

According to a preferred embodiment of the present invention, once the dough according to step a) has been obtained, it may be first subjected to a preliminary leavening step and then subjected to loaf-forming, i.e. it may be flattened and rolled up onto itself and finally may be placed in a mould inside which it may be left to rise.

In an equally preferred manner, following said oven-baking step b) and before the following cutting step c), the loaf of bread thus obtained may be subjected to a maturation step under controlled moisture conditions at a temperature of between 10°C and 45°C.

More preferably, said maturation step is carried out for a time period of between 8 and 24 hours.

For the purposes of the present invention, the expression "controlled moisture" is understood as meaning that the maturation step is carried out keeping the loaf of bread at a set moisture value for the entire time period during which this operation is carried out.

Advantageously, the maturation step facilitates the diffusion and the distribution of the moisture inside the loaf of bread and, therefore, the formation of slices of bread with a more uniform moisture content, both in respect of the outer part, i.e. the crust, and the inside of the single slice, i.e. the crumb part, and as regards the different slices obtained from the same loaf of bread.

The execution of a correct maturation step facilitates the following cutting step c) and engraving step e), resulting in the production of a finished product with more uniform moisture and consistency characteristics.

Preferably, during the cutting step c), the loaf of bread is cut into individual slices with a thickness of between 0.5 cm and 3 cm, preferably between 1 cm and 2 cm.

Preferably, during the engraving step e), the negative engraving impressed by the heatable embossed surface of the engraving module on at least one side of these slices of bread has a depth of between 10% and 50% of the preset thickness of said slices of bread.

Advantageously, in accordance with the process of the present invention, the negative engraving impressed on at least one side of the slices of bread during step e) is effectively maintained, in terms of its form and depth, during the subsequent production steps, so as to obtain rusk slices with an engraving which has a depth of between 10% and 50% of the preset thickness of the rusk slices thus obtained.

In an equally preferred manner, the engraving module provided in the aforementioned step d) and used subsequently in the engraving step e) is in the form of metal cylinder.

In particular, the engraving module may have a heatable embossed surface suitable for impressing corresponding negative engravings on a plurality of rusk slices, respectively.

More specifically, said engraving module, which may be in the form of a metal cylinder, comprises movement means for bringing the heatable embossed surface into contact with said at least one side of the slices of bread.

Advantageously, these movement means allow the engraving module to be moved rapidly towards the at least one side of the slices of bread which are to be engraved so as to perform the aforementioned engraving step e) when the cutting step c) and arranging step d) have been completed.

In an equally advantageous manner, these movement means allow the engraving module to be rapidly moved away, as required, from the slices of bread as soon as the engraving step e) has been completed.

In accordance with a preferred embodiment, the process according to the present invention is carried out continuously.

In an entirely preferred manner, during the aforementioned step d), the slices of bread are arranged on a conveyor belt or a conveying meshwork having a predefined speed and, also owing to the action of these movement means, during the following step e), the engraving module, which may be in the form of a metal cylinder, moves in synchronism with said conveyor belt.

Preferably the engraving module provided in the aforementioned step d) and used subsequently in the engraving step e) has a heatable embossed surface with a substantially corrugated or knurled form.

More preferably, said engraving module has a heatable embossed surface with a knurled form having parallel lines, which may be made with a low relief.

For example, when the engraving module is a cylinder, said heatable embossed surface may be made in the form of grooves or incisions with a polygonal or curved cross-section alternating with ridges which extend along the length of the cylinder.

In particular, when the engraving module has a heatable embossed surface with a knurled parallel-line form it is possible to obtain a rusk slice which is ridged, namely with at least one side which has respective ridges or lines alternating with grooves.

Alternatively, said engraving module may have a heatable surface with any embossed design, for example with a logo.

Preferably, during the aforementioned engraving step e), the heatable embossed surface of the engraving module has a temperature of between 190°C and 240°C.

Preferably, the aforementioned toasting step f) may be performed so as to obtain rusk slices with a moisture content of between 2% and 6%, more preferably between 2.5% and 5%, by weight of their total weight.

Preferably, the toasting step f) may be carried out at a temperature of between 130°C and 250°C, more preferably between 190°C and 250°C, even more preferably between 195°C and 240°C.

In an equally preferred manner, the toasting step may be carried out for a time of between 5 minutes and 60 minutes.

It is also disclosed a rusk slice which can be stored at room temperature for a period of at least 180 days and which can be obtained by means of the process according to the present invention and having a preset thickness, a perimetral crust, also called lateral crust, and two flat opposite sides, where at least one side has an engraving.

Preferably, the present rusk slice can be stored at room temperature for a period of between 180 days and one year.

More specifically, said engraving is impressed on a slice of bread during the aforementioned engraving step e) and by means of a heated engraving module, for example in the form of a metal cylinder, having a heatable embossed surface. The engraving on the side of the rusk slice has a profile complementing that of the heatable embossed surface of the engraving module.

Preferably, the engraving of the aforementioned rusk slice has a depth of between 10% and 50% of the preset thickness of the rusk slice.

More specifically, the engraving of the rusk slice has a profile with a substantially corrugated or knurled form, for example a knurled parallel-line form.

As will be shown in greater detail in the detailed description with reference to figure, the rusk slice in question has at least one side with a knurled surface, the latter being formed as a plurality of grooves or incisions, preferably with a polygonal or curved cross-section, more preferably with a semi-circular cross-section, alternating with ridges.

Basically, the rusk slice has all the advantages described above in connection with the process for the production thereof, including a large surface area available for the application of a spreadable topping, optimum structural characteristics, and particular organoleptic characteristics, as will be illustrated below in relation to the detailed description.

The present invention is further described below in the detailed description, with reference to a number of examples of embodiment provided hereinbelow way of a non-limiting example.

### Brief description of the figures

Figure 1 shows a rusk slice obtained by means of the process according to the present invention.
Figure 2 shows a rusk slice obtained by means of a process different from that of the present invention.

### Detailed description

As mentioned above, the process according to the present invention has proved to be particularly effective for the production of a rusk slice with at least one side having an engraving, essentially a rusk slice with an available surface for the application of a spreadable topping which is greater than that of rusk slices according to the prior art.

Moreover, the process according to the present invention ensures that, during the steps following the engraving step, the engraving thus impressed on at least one side of the slice of bread is advantageously maintained in terms of its depth during the toasting step.

These advantages are demonstrated below in relation to a first example (Example 1) in which the process according to the present invention is carried out.

Describing in greater detail the step a) of the process according to the present invention, the dough meal thus provided may be wheat flour or any mixture containing a wheat flour with a meal of another cereal, for example a mixture of wheat flour and corn flour.

Optionally, the leavening agent of the dough thus provided may be brewer's yeast, sourdough yeast or any yeast or composition comprising a live yeast.

In detail, the dough thus provided may comprise as required, in addition to a cereal meal, water and yeast, sugar, oils and fats, malt, malted products, edible bran, aromas or any combination of these.

Optionally, the dough in question may comprise further additives.

In greater detail. the dough thus provided in step a) of the process according to the invention comprises at least one vegetable oil, which may be sunflower seed oil as required.

Entirely optionally, according to an example of a recipe which may be used during the step a) of the present process, the dough thus provided may be formulated as shown in Table 1 below:

**Table 1**

| INGREDIENTS | % in the dough |
|---|---|
| Flour | 65-73 |
| Water | 17-25 |
| Malt | 1 - 2.5 |
| Sugar | 1 - 2.5 |
| Vegetable oil | 0.5 - 5 |
| Yeast | 0.5 - 4 |
| Salt | 0.1 - 2 |

In the Example 1 below the step a) of the process involves the preparation of a leavened dough according to a more specific recipe which is entirely exemplary in nature.

### Example 1

Firstly, the ingredients required by the recipe below shown in Table 2 were obtained for the preparation of a dough in accordance with step a) of the process according to the present invention.

**Table 2**

| INGREDIENTS | Quantity (g) | % in the dough |
|---|---|---|
| Wheat flour | 1050 | 70 |
| Water | 330 | 22 |
| Barley and corn flour | 30 | 2 |
| Saccharose | 30 | 2 |
| Sunflower seed oil | 30 | 2 |
| Brewer's yeast | 22.5 | 1.5 |
| Salt | 7.5 | 0.5 |

The ingredients shown in Table 2 were mixed in a mixer until a more or less uniform dough was obtained.

The dough was then divided into portions with the same weight (in this case two portions), pre-leavened and formed into loaves.

A portion of the dough was then arranged inside a mould where it was left to rise and then placed inside a convection oven.

The dough thus leavened was then baked at a constant average temperature of about 210°C for 20 minutes, resulting in a loaf of bread with a moisture content equal to about 30% by weight of its total weight.

The loaf of bread was then allowed to mature in controlled moisture conditions, at a temperature of about 40°C for a time of about 10 hours. The loaf exiting the maturation chamber had a moisture content equal to about 30% by weight of its total weight.

The loaf of bread was then cut transversely, with the aid of a cutter, into individual slices with a thickness of about 1.5 cm.

Then the slices of bread were arranged spread out on a conveyor belt with one of the two flat sides facing upwards and the opposite side resting fully on the conveyor belt.

The upward facing side was thus arranged so as to be fully accessible by the engraving module.

The engraving module consisted of a metal cylinder with a heatable embossed surface having a completely knurled parallel-line form.

The heatable embossed surface was then brought into contact with the side of the slice of bread facing the engraving module, resulting in the impression of a negative engraving complementing that of the heatable embossed surface of the metal cylinder.

The heatable embossed surface of the cylinder had a temperature of 230°C and was kept in contact with the upward facing side of the slices of bread for about 2 seconds.

The slices of bread, thus engraved entirely on their upward facing side, had knurling in the form of a plurality of grooves with a semi-circular cross-section separated by ridges or lines.

The grooves thus formed had a depth equal to about 15% of the thickness of the slices of bread.

Finally, the slices of bread thus engraved underwent a toasting step inside an oven set to a temperature of about 220°C for a time period of about 10 minutes.

The finished product had a moisture content equal to about 3.0% by weight of its total weight.

The rusk slices thus obtained had a ridged side on which there were a plurality of grooves with a semi-circular cross-section, having the same depth as the grooves in the slices of bread not yet toasted and obtained after the engraving step. The grooves were separated by constant-width ridges.

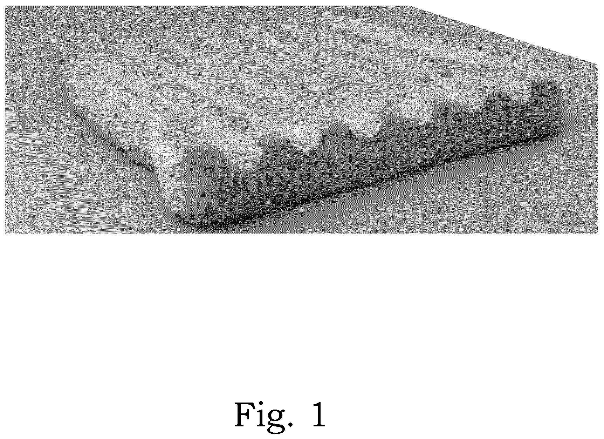

With reference to Figure 1, the rusk slices thus obtained had, on the surface of the side which had been engraved, an entirely characteristic colouring with an alternation of lighter sections along the grooves and darker, amber-coloured, sections on the ridges. The engraving impressed by the engraving cylinder was thus raised, providing an entirely characteristic ridged appearance.

As regards the consistency of the rusk slices thus obtained, the surface of the side thus engraved was at the same time compact and crunchy, providing the slice with very particular friability characteristics. The consistency, when tasted, of the rusk slice was pleasantly irregular owing to the different compactness of the grooves and ridges alternating with each other.

Basically, the rusk slices thus obtained had an available surface for the application of a spreadable product greater than that of a conventional rusk slice of the prior art, as well as rigidity characteristics entirely suitable for the purpose and a consistency when tasted which was characteristic as well as very pleasing for the consumer.

### Example 2

The same recipe as in Example 1 was used for the preparation of a uniform dough.

After division into portions, pre-leavening, loaf-forming and leavening, the leavened dough thus obtained was subjected to a following baking step, under the same experimental conditions as in Example 1.

The loaf of bread thus obtained then underwent maturation and cutting in a similar manner to that performed in Example 1.

The slices of bread thus obtained were arranged on a conveyor belt and, thereafter, following transfer onto a metal conveying meshwork, the same metal engraving cylinder used in Example 1 was brought into contact with the upward facing side of the slices of bread, resulting in the impression of a negative engraving with a profile complementing that of the heatable embossed surface of the cylinder.

The heatable embossed surface had a temperature of 250°C and was kept in contact with the upward facing side of the slices of bread for about 2 seconds.

The slices of bread, thus engraved, had a side with knurling in the form of a plurality of grooves with a semi-circular cross-section separated by ridges.

The grooves thus formed had a depth equal to about 15% of the thickness of the slice of bread.

Finally, the slices of bread thus engraved underwent a toasting step inside an oven set to a temperature of about 220°C for a time of about 10 minutes.

The finished product had a moisture content equal to about 3.0% by weight of its total weight.

The rusk slices thus obtained had one side which was substantially flat and one side with a corrugated surface.

The rusk slices thus obtained had in fact, on the engraved side, a plurality of grooves having the same form and depth as those present in the slices of bread previously obtained following the engraving step, but not yet toasted, and entirely similar to the rusk slices obtained in Example 1.

Furthermore, the rusk slices obtained in the present example had, on the surface of the engraved side, a colouring similar to that of the rusk slices obtained in Example 1 with a characteristic ridged appearance.

### Example 3

The same recipe as in Example 1 was used for the preparation again of a uniform dough.

After division into portions, pre-leavening, loaf-forming and leavening, the leavened dough thus obtained was subjected to a following baking step, under the same experimental conditions as in Example 1.

The loaf of bread thus obtained then underwent maturation and cutting in a similar manner to that performed in Example 1.

The slices of bread thus obtained were arranged on a conveyor belt and, thereafter, following transfer onto a metal conveying meshwork, the same metal engraving cylinder used in Example 1 was brought into contact with the upward facing side of the slices of bread, resulting in the impression of a negative engraving having a profile complementing that of the heatable embossed surface of the cylinder.

The heatable embossed surface had a temperature of 190°C and was kept in contact with the upward facing side of the slices of bread for about 3 seconds.

The slices of bread, thus engraved, had a side with knurling in the form of a plurality of grooves with a semi-circular cross-section separated by ridges.

The grooves thus formed had a depth equal to about 15% of the thickness of the slice of bread.

Finally, the slices of bread thus engraved underwent a toasting step inside an oven set to a temperature of about 220°C for a time of about 10 minutes.

The finished product had a moisture content equal to about 3.0% by weight of its total weight.

The rusk slices thus obtained had one side with a substantially flat surface and an opposite side with a corrugated surface.

The rusk slices thus obtained had in fact, on the side which had been engraved, a plurality of grooves having a depth comparable with, and only slightly less than, that of the grooves present in the slices of bread previously obtained following the engraving step, but not yet toasted.

The depth of the grooves in the rusk slices thus obtained was therefore only slightly less than that of the rusk slices obtained in Example 1, but was in any case acceptable and able to provide the surface of the engraved side with a characteristic ridged appearance entirely similar to that of the rusk slices obtained in Example 1.

### Example 4 - Execution of a process different from that of the invention

The same recipe as in Example 1 was used for the preparation of a uniform dough.

After division into portions, pre-leavening, loaf-forming and leavening, the leavened dough thus obtained was subjected to a following baking step, under the same experimental conditions as in Example 1.

The loaf of bread thus obtained then underwent maturation and cutting in a similar manner to that performed in Example 1.

The slices of bread thus obtained were arranged on a conveyor belt and, thereafter, following transfer onto a metal conveying meshwork, the same metal engraving cylinder used in Example 1 was brought into contact with the upward facing side of the slices of bread, resulting in the impression of a negative engraving having a profile complementing that of the heatable embossed surface of the cylinder.

The heatable embossed surface had a temperature of 185°C and was kept in contact with the upward facing side of the slices of bread for about 3 seconds.

The slices of bread, thus engraved, had a side with knurling in the form of a plurality of grooves with a semi-circular cross-section separated by ridges.

The grooves thus formed had a depth equal to about 15% of the thickness of the slices of bread.

Finally, the slices of bread thus engraved underwent a toasting step inside an oven set to a temperature of about 220°C for a time of about 10 minutes.

The finished product had a moisture content equal to about 3.0% by weight of its total weight.

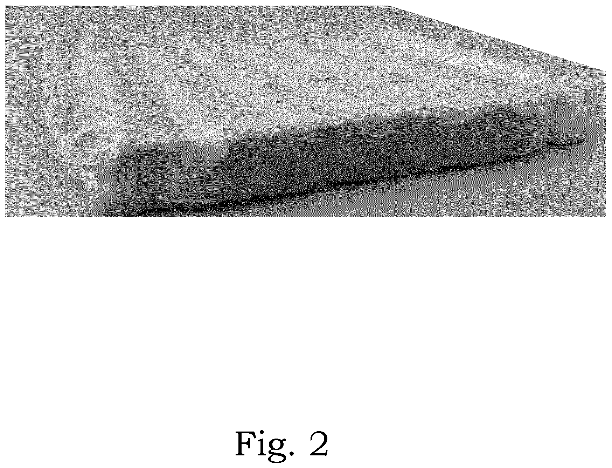

With reference to Figure 2, the rusk slices thus obtained had one side with a surface which was substantially flat and an opposite side with an only slightly corrugated surface.

Basically, the rusk slices thus obtained did not have on the engraved side a plurality of grooves having the same form and depth as those present in the slices of bread previously obtained following the engraving step, but not yet toasted.

The rusk slices obtained in the present example did not have a surface available for the application of a spreadable topping which was substantially greater than that of the rusk slices of the prior art.

Moreover, in the such weakly engraved side of the rusk slices obtained in the present example there was only a slight contrast between light-coloured sections and more amber-coloured sections. The rusk slices thus obtained finally proved to be less robust and less crunchy than the rusk slices obtained in Example 1.

## Claims

1. Process for the production of rusk slices comprising the steps of:
a) providing a dough comprising at least a cereal meal, water and a leavening agent;
b) oven-baking said dough, thereby obtaining a loaf of bread;
c) cutting crosswise said loaf of bread into individual slices of bread having a preset thickness, a perimetral crust and two flat opposite sides;
d) arranging said slices of bread so that at least one side faces an engraving module which has a heatable embossed surface;
e) bringing the heatable embossed surface of the engraving module into contact with said at least one side of the slices of bread facing the engraving module for a time of between 0.5 and 3 seconds, so as to impress on said side a negative engraving having a profile complementing that of said heatable embossed surface of the engraving module, said heatable embossed surface having a temperature of between 190°C and 260°C;
f) toasting said slices of bread thus engraved, thereby obtaining rusk slices having at least one engraved side and a moisture content of between 2% and 7% by weight of their total weight.

2. Process according to claim 1, wherein said oven-baking step b) is carried out at a temperature of between 150°C and 240°C, preferably between 180°C and 230°C, more preferably for a time of between 10 minutes and 60 minutes.

3. Process according to claim 1 or 2, wherein said oven-baking step b) is carried out so as to obtain a loaf of bread with a moisture content of between 25% and 34% by weight of its total weight.

4. Process according to any one of claims 1-3, wherein in said engraving step e) the negative engraving impressed by said heatable embossed surface of the engraving module on said at least one side of the slices of bread has a depth of between 10% and 50% of the preset thickness of said slices of bread.

5. Process according to any one of claims 1-4, wherein said engraving module is in the form of a metal cylinder.

6. Process according to any one of claims 1-5, wherein said heatable embossed surface of the engraving module has a corrugated or knurled form, preferably a knurled form with parallel lines.

7. Process according to any one of claims 1-6, wherein in said engraving step e) said heatable embossed surface of the engraving module has a temperature of between 190°C and 240°C.

8. Process according to any one of claims 1-7, wherein said toasting step f) is carried out so as to obtain rusk slices having a moisture content of between 2% and 6%, preferably between 2.5% and 5%, by weight of their total weight.

9. Process according to any one of claims 1-8, wherein said toasting step f) is carried out at a temperature of between 130°C and 250°C, preferably between 195°C and 240°C, more preferably for a time of between 5 minutes and 60 minutes.

10. Process according to any one of claims 1-9, wherein said process is carried out continuously.

## Patentansprüche

1. Verfahren zur Herstellung von Zwiebackscheiben, das die folgenden Schritte umfasst:
a) Bereitstellen eines Teigs, der mindestens ein Getreidemehl, Wasser und ein Backtriebmittel umfasst;
b) Backen des Teigs im Ofen, um einen Brotlaib zu erhalten;
c) kreuzweises Schneiden des Brotlaibs in einzelne Brotscheiben mit einer vorgegebenen Dicke, einer Umfangskruste und zwei flachen gegenüberliegenden Seiten;
d) Anordnen der Brotscheiben, so dass mindestens eine Seite einem Gravurmodul zugewandt ist, das eine beheizbare Prägefläche hat;
e) Inkontaktbringen der beheizbaren Prägefäche des Gravurmoduls mit der mindestens einen Seite der Brotscheiben, die dem Gravurmodul zugewandt ist, für eine Zeit zwischen 0,5 und 3 Sekunden, um auf dieser Seite eine negative Gravur mit einem Profil einzuprägen, das zu der beheizbaren Prägefläche des Gravurmoduls komplementär ist, die beheizbare Prägefläche hat eine Temperatur von zwischen 190°C und 260°C;
f) Toasten der so gravierten Brotscheiben, um Zwiebackscheiben mit mindestens einer gravierten Seite und einem Feuchtigkeitsgehalt von zwischen 2% und 7% ihres Gesamtgewichts zu erhalten.

2. Verfahren gemäß Anspruch 1, wobei der Ofenbackschritt b) bei einer Temperatur zwischen 150°C und 240°C, vorzugsweise von zwischen 180°C und 230°C, weiter bevorzugt für eine Zeit zwischen 10 Minuten und 60 Minuten durchgeführt wird.

3. Verfahren gemäß Anspruch 1 oder 2, wobei der Ofenbackschritt b) so durchgeführt wird, dass ein Brotlaib mit einem Feuchtigkeitsgehalt zwischen 25% und 34% seines Gesamtgewichts erhalten wird.

4. Verfahren gemäß einem der Ansprüche 1-3, wobei in dem Gravurschritt e) die negative Gravur, die durch die beheizbare Prägefläche des Gravurmoduls auf der mindestens einen Seite der Brotscheiben eine Tiefe zwischen 10% und 50 % der vorgegebenen Dicke der Brotscheiben hat.

5. Verfahren gemäß einem der Ansprüche 1-4, wobei das Gravurmodul die Form eines Metallzylinders hat.

6. Verfahren gemäß einem der Ansprüche 1-5, wobei die beheizbare Prägefläche des Gravurmoduls eine geriffelte oder gerändelte Form, vorzugsweise eine gerändelte Form mit parallelen Linien hat.

7. Verfahren gemäß einem der Ansprüche 1-6, wobei in dem Gravurschritt e) die beheizbare Prägefläche des Gravurmoduls eine Temperatur von zwischen 190°C und 240°C hat.

8. Verfahren gemäß einem der Ansprüche 1-7, wobei der Toastschritt f) so durchgeführt wird, dass Zwiebackscheiben mit einem Feuchtigkeitsgehalt von zwischen 2% und 6 %, vorzugsweise zwischen 2,5% und 5 % ihres Gesamtgewichts erhalten werden.

9. Verfahren gemäß einem der Ansprüche 1-8, wobei der Toastschritt f) bei einer Temperatur von zwischen 130°C und 250°C, vorzugsweise zwischen 195°C und 240°C, weiter bevorzugt für eine Zeit zwischen 5 Minuten und 60 Minuten durchgeführt wird.

10. Verfahren gemäß einem der Ansprüche 1-9, wobei das Verfahren kontinuierlich durchgeführt wird.

## Revendications

1. Procédé pour la production de tranches de biscottes comprenant les étapes de :
a) fourniture d'une pâte comprenant au moins une farine de céréale, de l'eau et un agent levant ;
b) cuisson au four de ladite pâte, obtenant par-là une miche de pain ;
c) découpe transversale de ladite miche de pain en tranches individuelles de pain ayant une épaisseur prédéfinie, une croûte en périmètre et deux côtés opposés plats ;
d) disposition desdites tranches de pain de sorte qu'au moins un côté fait face à un module de gravure qui présente une surface bosselée pouvant être chauffée ;
e) mise en contact de la surface bosselée pouvant être chauffée du module de gravure avec ledit au moins un côté des tranches de pain faisant face au module de gravure sur une durée de 0,5 à 3 secondes, afin d'imprimer sur ledit côté une gravure négative ayant un profil complétant celui de ladite surface bosselée pouvant être chauffée du module de gravure, ladite surface bosselée pouvant être chauffée ayant une température de 190°C à 260°C ;
f) le passage au grill desdites tranches de pain ainsi gravées, obtenant par-là des tranches de biscottes ayant au moins un côté gravé et une teneur en humidité de 2 % à 7 % en masse de leur masse totale.

2. Procédé selon la revendication 1, dans lequel ladite étape de cuisson en four b) est réalisée à une température de 150°C à 240°C, de préférence de 180°C à 230°C, encore mieux sur une durée de 10 minutes à 60 minutes.

3. Procédé selon la revendication 1 ou 2, dans lequel ladite étape de cuisson en four b) est réalisée afin d'obtenir une miche de pain avec une teneur en humidité de 25 % à 34 % en masse de sa masse totale.

4. Procédé selon l'une quelconque des revendications 1-3, dans lequel dans ladite étape de gravure e) la gravure négative imprimée par ladite surface bosselée pouvant être chauffée du module de gravure sur ledit au moins un côté des tranches de pain présente une profondeur de 10 % à 50 % de l'épaisseur prédéfinie desdites tranches de pain.

5. Procédé selon l'une quelconque des revendications 1-4, dans lequel ledit module de gravure est dans la forme d'un cylindre en métal.

6. Procédé selon l'une quelconque des revendications 1-5, dans lequel ladite surface bosselée pouvant être chauffée du module de gravure présente une forme ondulée ou moletée, de préférence une forme moletée avec des lignes parallèles.

7. Procédé selon l'une quelconque des revendications 1-6, dans lequel dans ladite étape de gravure e) ladite surface bosselée pouvant être chauffée du module de gravure présente une température de 190°C à 240°C.

8. Procédé selon l'une quelconque des revendications 1-7, dans lequel ladite étape de passage au grill f) est réalisée afin d'obtenir des tranches de biscottes ayant une teneur en humidité de 2 % à 6 %, de préférence de 2,5 % à 5 %, en masse de leur masse totale.

9. Procédé selon l'une quelconque des revendications 1-8, dans lequel ladite étape de passage au grill f) est réalisée à une température de 130°C à 250°C, de préférence de 195°C à 240°C, encore mieux sur une durée de 5 minutes à 60 minutes.

10. Procédé selon l'une quelconque des revendications 1-9, dans lequel ledit procédé est réalisé en continu.
